# EUROPEAN PATENT APPLICATION

(11) **EP 1 598 752 A2**
(43) Date of publication of application: **23.11.2005**
(21) Application number: 05103820.6
(22) Date of filing: 09.05.2005
(51) Int. Cl.: G06F 17/22, G06F 17/28

(54) **Localization of xml via transformations**

(30) Priority: 21.05.2004 US 573228; 14.07.2004 US 890975
(71) Applicant: MICROSOFT CORPORATION, Redmond, Washington 98052-6399 (US)
(72) Inventor: Stanciu, Constantin, 98052, Redmond (US); Roma i Dalfo, Ricard, 98052, Redmond (US)
(74) Representative: Zimmer, Franz-Josef

(57) **Abstract**

Described are techniques and mechanisms directed at enabling a markup transformation that is localizable. Generally stated, a transform receives as input two things: (1) an input document containing markup, and (2) transformation instructions including an identifier of a particular element that has different values based on a localized variable. During the process, the transform retrieves from a data structure a localized value associated with the identifier. The transform then proceeds with the transformation using the localized value.

## Description

### FIELD

Various embodiments described below relate generally to the translation of markup documents, and more particularly but not exclusively to the locale-aware translation of markup documents.

### BACKGROUND

Businesses today handle a lot of data in markup format, and particularly eXtensible Markup Language (XML) format. Businesses build processes around markup documents and may transform them from one form to another to reach a desired end result. When processes are built around XML documents, typically different pieces of XML are transformed and aggregated to get the expected output at the end of the process. The eXtensible Style Language (XSL) is currently the preferred language for applying these transformations, although many other languages could be used.

Currently, transformation languages perform acceptably to allow selecting, aggregating, and slicing the original XML markup into the desired output, but typically they have no globalization/localization support. In other words, existing technology does not provide a mechanism for including localized data into a transformation process in an automated fashion. Rather, different transformations must be created for each locality in which the transformation process is performed. An adequate solution to this problem has eluded those skilled in the art, until now.

### SUMMARY

The present invention is directed at techniques and mechanisms to incorporate globalization/localization into existing transformation processes or engines (e.g., XSL transforms). Briefly stated, a transform receives an input document containing markup, and transformation instructions including an identifier of a particular element that has different values based on a localized variable. The transformation instructions may be in the form of an XSL style sheet. The transform identifies the particular state of the localized variable on the host system. Using the state of the localized variable, the transform retrieves from a data structure a localized value associated with the identifier by the localized variable. The transform then proceeds with the transformation using the localized value.

### BRIEF DESCRIPTION OF THE DRAWINGS

Non-limiting and non-exhaustive embodiments are described with reference to the following figures, wherein like reference numerals refer to like parts throughout the various views unless otherwise specified.

FIG. 1 is a conceptual block diagram illustrating a data structure for mapping an index to a localized value for that index.

FIG. 2 is a functional block diagram illustrating a system for performing a localizable transformation on an input markup document.

FIG. 3 is a flow diagram generally illustrating a process for performing a localized markup transformation.

FIG. 4 is a flow diagram generally illustrating a particular process for translating a string from an input markup document into a translated string based on a local variable setting on a host system.

FIG. 5 is a functional block diagram generally illustrating an illustrative computing environment in which various embodiments of the techniques and mechanisms described herein may be implemented.

### DETAILED DESCRIPTION

The following techniques and mechanisms are directed at enabling a markup transformation that is localizable. Generally stated, a transform receives as input two things: (1) an input document containing markup, and (2) transformation instructions including an identifier of a particular element that has different values based on a localized variable. During the process, the transform retrieves from a data structure a localized value associated with the identifier. The transform then proceeds with the transformation using the localized value. Specific implementations of this general concept will now be described.

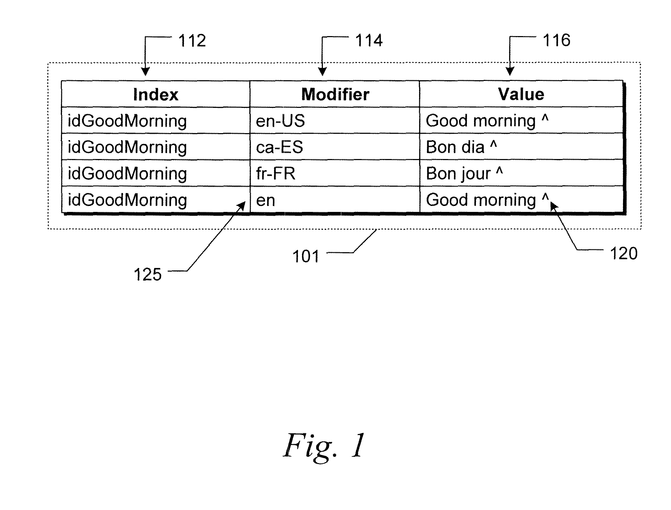

FIG. 1 is a conceptual diagram of a data structure (e.g., a table 101) in which is stored information sufficient to map an Index to a Value by a Modifier. This particular implementation uses a table with three columns: the index 112, the modifier 114, and the value 116. The index 112 is an identifier for particular localizable content the actual value of which depends on the locale controlling the transformation. In other words, the index 112 identifies, in a non-localized manner, the substance of the desired result. The index 112 is unique for each item of data to be localized.

The modifier 114 is an identifier for the particular context in which it is desired to transform the index 112. For example, in an implementation that performs a transformation based on a local language variable, the modifier 114 may identify the particular language desired. The example illustrated in FIG. 1 shows three different modifiers 114 for three different languages: en-US for English, ca-ES for Catalan, and fr-FR for French. Note that the modifiers illustrated here are illustrative only, and countless other forms could be used. The value 116 is the intended result corresponding to each modifier. The value 116 may also include an insertion point identifier 120 to identify where additional text or data may be included into the value data. This feature will be described in greater detail later.

For instance, if the transformation were local-language based, the value 116 might include the particular text for the substance identified by the index 112 in the language identified by the modifier 114. In the particular example illustrated in FIG. 1, there is one index (idGoodMoming) and three different entries for three different languages (English, Catalan, and French).

In this particular implementation, a fourth entry 125 is included as a fallback entry. The fallback entry may be thaught of as a default or catch all for cases where a particular desired modifier 114 is not present in the table 101. Using language identifiers as only an example, the first two characters (e.g., "en") may be used to identify a genus of language (such as English), and the last two characters (e.g., "US) may be used to identify a species of that genus (such as American English). Thus, if the desired language identifier were "en-CA", which is not present in the table, the fallback entry 125 could be used. Multiple fallback entries also could be used. A single, ultimate fallback entry, which may be a blank entry, could also be used in cases where there were no other identifiable fallbacks.

The location of the information contained in the table 101 could be stored in any of one or more several locations, such as a standalone table or file, as metadata or data in a database or similar repository, as XML markup, or any other location accessible by a transformation process.

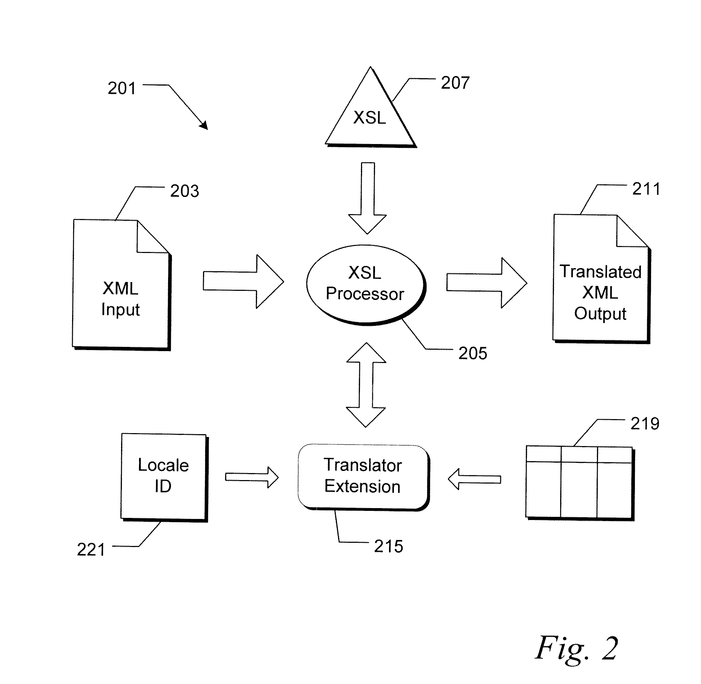

FIG. 2 is a functional block diagram generally illustrating a system 201 for applying an XSL transformation to an input XML document 203. Generally stated, in an XSL transformation, an XSL processor 205 reads the input XML document 203 and an XSL style sheet 207. Based on instructions in the XSL style sheet 207, the processor 205 outputs a new (transformed) XML document 211, which may include all of, a portion of, or none of the original content of the input XML document 203.

The input XML document 203 contains any arbitrary markup that a user desires to be transformed using the XSL transformation. What follows is a sample of XML markup that could be included in the input XML document 203 :

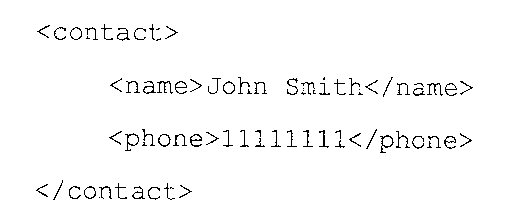

As will be appreciated, this sample markup defines a contact element having a name sub-element and a phone number sub-element. In practice, it is envisioned that the input XML document 203 is likely to include any manner of arbitrary markup, having various elements and data.

The system 210 also includes a translator extension 215, which is an object that has access to a translation table 219 (as described above in conjunction with FIG. 1) and exposes various methods for resolving an index into a localized value, such as for performing translations or formatting sentences in different languages. One specific example could be the following pseudo-code for the translator extension 215:

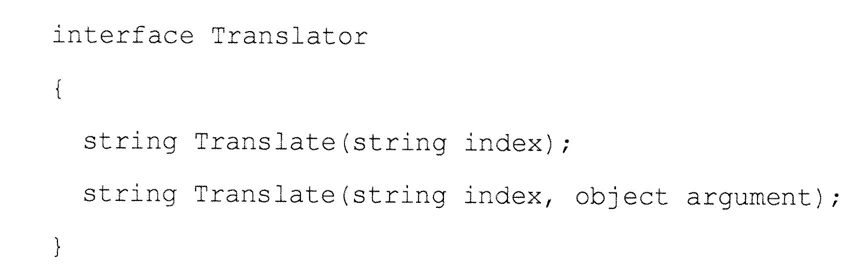

In this example the two methods perform static and dynamic translations, respectively. For instance, Translate("idGoodMorning") may translate to "Bon jour", and Translate("idGoodMorning", "John") may translate to "Bon jour John" if the intended language (the modifier) is French (fr-FR).

The locale ID 221 defines the particular state of some local variable, such as the language in use on the local system, and is used to determine which modifier (see FIG. 1) to use in the transformation. Although the examples provided here focus on a local language, it should be appreciated that any environment variable may be used as the locale ID 221, such as the current user of the system, the particular time zone set on the system, the currency configuration, or any other environment or dynamic variable, either localizable or non-localizable.

Finally, the XSL style sheet 207 contains instructions or commands that define the manner in which the input XML document 203 is to be modified to achieve the desired end result. Accordingly, the XSL style sheet 207 can include expressions that invoke the translator extension 215 to perform arbitrary localization operations, in accordance with local variables defined in the locale ID 221. For instance, consider the following sample XSL markup:

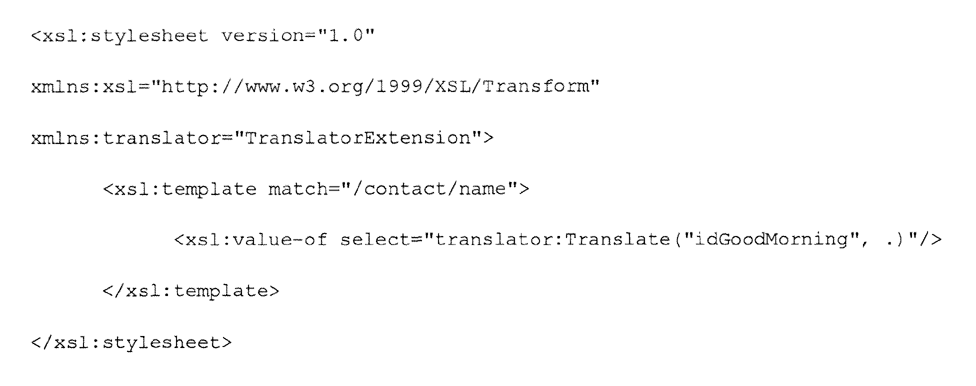

This sample XSL markup, when executed by the XSL processor, invokes the Translate method of the translator extension 215 with the index "idGoodMorning" and the content of the first "/contact/name" element in the input XML document 203. This instruction causes the translator extension 215 to retrieve the current state of the locale ID 221 for the local system, and to retrieve from the translation table 219 the localized value for the index that corresponds to the locale ID 221. In other words, using the locale ID 221 as a modifier, the translator extension 215 retrieves the localized value for the index "idGoodMorning". Given the sample markup described above for the input XML document 203, the result of the translation would be "Bon jour John Smith" if the local language were French (fr-FR). Note that in accordance with the particular method described here, the content of the "/content/name" element ("John Smith" in this example) is added to the localized value at the insertion point 120 (FIG. 1).

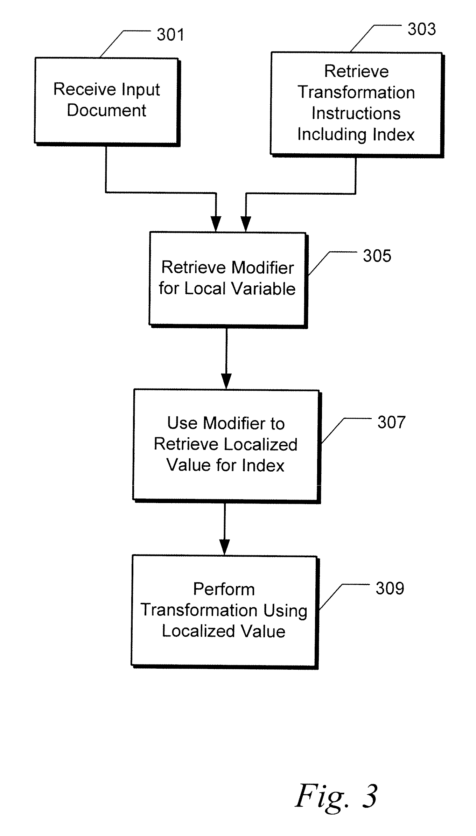

Turning now to FIG. 3, a generalized process 300 for performing a localized markup transformation is illustrated. The process 300 begins when an XSL processor, such as described above, receives an input markup document (block 301) and transformation instructions that include an index (block 303). The presence of the index indicates that localized data is being requested, and accordingly, the XSL processor causes to be retrieved a modifier (local variable) corresponding to the index (block 305). In other words, if the index relates to the particular local language setting on the host system, the modifier may be a language identifier, or the like. It should be appreciated that this operation may be performed by an extension to the XSL processor, or it may be performed by functionality incorporated within the XSL processor.

The particular modifier is then used to retrieve a localized value that corresponds to the index (block 307). More specifically, the index may have different localized values that depend on the particular state of a local variable, such as the language of the host system. The modifier defines the state of the local variable on the host system, and thus, is used to identify the appropriate localized value for the index on the host system. In one implementation, the localized value may be retrieved from a translation table or the like.

Using that information, the XSL processor performs the transformation using the localized value just discovered. It will be appreciated that using this process, the same XSL style sheet may be used to perform transformations on various arbitrary host systems while still achieving localized end results.

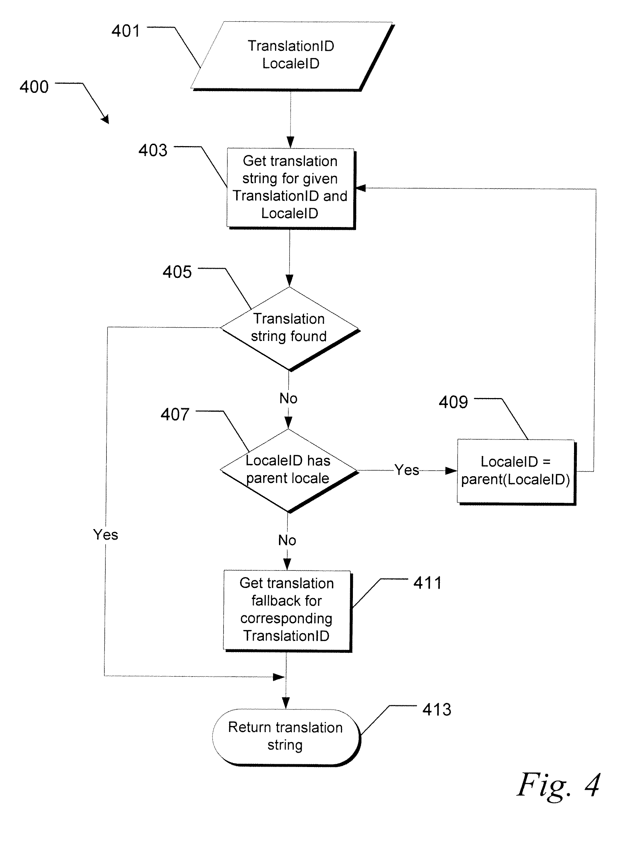

FIG. 4 is a flow diagram generally illustrating a particular process for translating a string from an input markup document into a translated string based on a local variable setting on a host system. This particular process illustrates that an iterative process may be performed to identify a translated string (i.e., a localized value) even if a perfect match for the local variable is not found in a translation table.

The process 400 begins when an index (TranslationID in the Figure) and a modifier (LocaleID in the figure) are provided to a transform (block 401). Using the index and the modifier, the transform attempts to retrieve the localized value (translation string in the Figure) for the index corresponding to the modifier (block 403). If the appropriate localized value (translation string) is found, the transform returns that string (block 413), and the process 400 ends.

If, however, a perfect match for the localized value (translation string) is not found, a determination is made whether the current modifier (LocaleID) has a parent (block 407). In some cases, the modifier (LocaleID) may relate to an object or other context that has a parent, and the parent could have its own respective modifier (LocaleID) that differs from the child object or context. In that case (block 409), the transform may retry retrieving a localized value (translation string) using the parent's modifier (LocaleID). Otherwise, the transform may retrieve a default or fallback localized value (translation string) (block 411) and return that value (block 413). One way to do this is by using the closest matching substring. So for "en-CA" the closest matching substring would be "en".

Although the above processes are illustrated and described sequentially, in other embodiments, the operations described in the blocks may be performed in different orders, multiple times, and/or in parallel.

### ILLUSTRATIVE OPERATING ENVIRONMENT

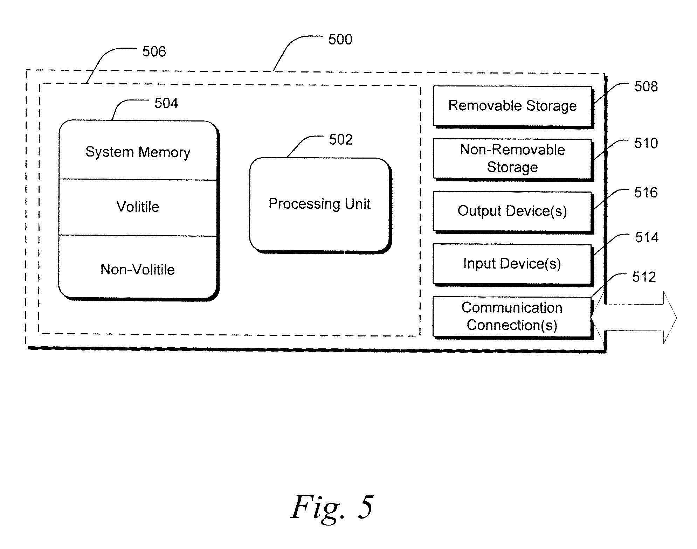

The various embodiments described above may be implemented in computer environments of the server and clients. An example computer environment suitable for use in the server and clients is described below in conjunction with FIG. 5.

With reference to FIG. 5, an exemplary system for implementing the invention includes a computing device, such as computing device 500. In its most basic configuration, computing device 500 typically includes at least one processing unit 502 and memory 504. Depending on the exact configuration and type of computing device, memory 504 may be volatile (such as RAM), non-volatile (such as ROM, flash memory, etc.) or some combination of the two. This most basic configuration is illustrated in Figure 5 by dashed line 506. Additionally, device 500 may also have additional features/functionality. For example, device 500 may also include additional storage (removable and/or non-removable) including, but not limited to, magnetic or optical disks or tape. Such additional storage is illustrated in Figure 5 by removable storage 508 and non-removable storage 510. Computer storage media includes volatile and nonvolatile, removable and non-removable media implemented in any method or technology for storage of information such as computer readable instructions, data structures, program modules or other data. Memory 504, removable storage 508 and non-removable storage 510 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by device 500. Any such computer storage media may be part of device 500.

Device 500 may also contain communications connection(s) 512 that allow the device to communicate with other devices. Communications connection(s) 512 is an example of communication media. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

Device 500 may also have input device(s) 514 such as keyboard, mouse, pen, voice input device, touch input device, etc. Output device(s) 516 such as a display, speakers, printer, etc. may also be included. All these devices are well know in the art and need not be discussed at length here.

Device 500 may include a variety of computer readable media. Computer readable media can be any available media that can be accessed by device 500 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by device 500. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

Various modules and techniques may be described herein in the general context of computer-executable instructions, such as program modules, executed by one or more computers or other devices. Generally, program modules include routines, programs, objects, components, data structures, etc. for performing particular tasks or implement particular abstract data types. These program modules and the like may be executed as native code or may be downloaded and executed, such as in a virtual machine or other just-in-time compilation execution environment. Typically, the functionality of the program modules may be combined or distributed as desired in various embodiments.

An implementation of these modules and techniques may be stored on or transmitted across some form of computer readable media. Computer readable media can be any available media that can be accessed by a computer. By way of example, and not limitation, computer readable media may comprise "computer storage media" and "communications media."

"Computer storage media" includes volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer readable instructions, data structures, program modules, or other data in a modulated data signal, such as carrier wave or other transport mechanism. Communication media also includes any information delivery media. The term "modulated data signal" means a signal that has one or more of its characteristics set or changed in such a manner as to encode information in the signal. As a non-limiting example only, communication media includes wired media such as a wired network or direct-wired connection, and wireless media such as acoustic, RF, infrared, and other wireless media. Combinations of any of the above are also included within the scope of computer readable media.

Reference has been made throughout this specification to "one embodiment," "an embodiment," or "an example embodiment" meaning that a particular described feature, structure, or characteristic is included in at least one embodiment of the present invention. Thus, usage of such phrases may refer to more than just one embodiment. Furthermore, the described features, structures, or characteristics may be combined in any suitable manner in one or more embodiments.

One skilled in the relevant art may recognize, however, that the invention may be practiced without one or more of the specific details, or with other methods, resources, materials, *etc.* In other instances, well known structures, resources, or operations have not been shown or described in detail merely to avoid obscuring aspects of the invention.

While example embodiments and applications have been illustrated and described, it is to be understood that the invention is not limited to the precise configuration and resources described above. Various modifications, changes, and variations apparent to those skilled in the art may be made in the arrangement, operation, and details of the methods and systems of the present invention disclosed herein without departing from the scope of the claimed invention.

## Claims

1. A computer-implemented method for transforming localized information, comprising:
receiving an input markup document;
determining a localized value for an index defined in transformation instructions for the input markup document; and
performing a transformation on the input markup document using the localized value.

2. The computer-implemented method recited in claim 1, wherein the input markup document comprises an eXtensible Markup Language document.

3. The computer-implemented method recited in claim 1, wherein the input markup document includes at least one element intended to be transformed in accordance with the localized value of the index.

4. The computer-implemented method recited in claim 3, wherein the at least one element comprises a string, the localized value comprises information corresponding to a local language set on a host computer on which the transformation is performed, and the transformation comprises incorporating the string into the local language using the localized value.

5. The computer-implemented method recited in claim 1, wherein the localized value comprises a value for a local variable identified by the index.

6. The computer-implemented method recited in claim 1, wherein determining the localized value for the index comprises:
retrieving a modifier from a host computer on which the transformation is performed, the modifier identifying a characteristic of the host computer, and
retrieving the localized value from a plurality of options for the localized value, the characteristic being used to distinguish which of the plurality of options is appropriate for the localized value.

7. The computer-implemented method recited in claim 6, wherein the characteristic comprises a particular language setting for the host computer, and the plurality of options comprise various language settings.

8. The computer-implemented method recited in claim 6, further comprising if the characteristic cannot be used to affirmatively distinguish which of the plurality of options is appropriate, selecting a fallback option from the plurality of options.

9. The computer-implemented method recited in claim 1, wherein the transformation instructions are comprised within a style sheet document.

10. A computer-readable medium encoded with computer-executable instructions for performing the computer-implemented method recited in claim 1.

11. A computer-readable medium having computer executable components for localizing information, the components comprising:
a mapping device that maps an index to a localized value; and
a translator extension in operative communication with a translation processor, the translation processor being configured to transform an input markup document using transformation instructions, the translator extension being configured to retrieve the localized value from the mapping device in response to a request from the translation processor, the request including the index.

12. The computer-readable medium recited in claim 11, wherein the mapping device maps the index to the localized value using a modifier, the modifier identifying one of a plurality of options for a localized variable.

13. The computer-readable medium recited in claim 12, wherein the modifier identifies a locale setting on a host computer.

14. The computer-readable medium recited in claim 11, wherein the mapping device comprises a table.

15. The computer-readable medium recited in claim 11, wherein the translation processor comprises an extensible Style Sheet transformation processor.

16. The computer-readable medium recited in claim 15, wherein the transformation instructions are comprised within a style sheet document.

17. A computer-readable medium encoded with a data structure, the data structure comprising:
a first field containing an index that identifies localizable content;
a plurality of second fields, each second field containing a possible localized value of the localizable content identified by the index; and
a plurality of third fields, each third field being associated with a second field, each third field containing a modifier associated with a locale,
wherein each modifier maps the index to a particular localized value based on the locale associated with the modifier.

18. The computer-readable medium recited in claim 17, wherein the data structure comprises an eXtensible Markup Language document.

19. The computer-readable medium recited in claim 17, wherein the data structure comprises a table.

20. The computer-readable medium recited in claim 17, wherein at least one second field includes an insertion point identifier identifying a location within the possible localized value at which information may be incorporated.

21. The computer-readable medium recited in claim 20, wherein the information comprises input information provided in connection with the index.
